# EUROPÄISCHE PATENTSCHRIFT

(11) **EP 3 277 981 B1**
(45) Veröffentlichungstag und Bekanntmachung des Hinweises auf die Patenterteilung: **26.06.2019**
(21) Anmeldenummer: 16715445.9
(22) Anmeldetag: 14.03.2016
(51) Int. Cl.: F16H 25/22, F16H 57/04, F16H 57/08, F15B 7/08, F16D 29/00

(54) **AKTOR MIT EINEM PLANETENWÄLZGEWINDETRIEB (PWG)**
ACTUATOR HAVING A PLANETARY ROLLER SCREW DRIVE (PRS)
ACTIONNEUR MUNI D'UNE VIS D'ENTRAÎNEMENT À ROULEMENT PLANÉTAIRE (PWG)

(30) Priorität: 30.03.2015 DE 102015205717
(43) Veröffentlichungstag der Anmeldung: 07.02.2018
(73) Patentinhaber: Schaeffler Technologies AG & Co. KG, 91074 Herzogenaurach (DE)
(72) Erfinder: SCHUMANN, Lars, 77815 Bühl (DE); MÁN, Lászlo, 77833 Ottersweier-Unzhurst (DE); GREB, Peter, 77833 Ottersweier (DE); DREHER, Alexander, 76547 Sinzheim (DE)
(86) Internationale Anmeldenummer: PCT/DE2016/200137
(87) Internationale Veröffentlichungsnummer: WO 2016/155722

(56) Entgegenhaltungen:
- WO-A1-2015/131889
- DE-A1-102012 212 311
- DE-A1-102013 201 473
- US-A1- 2014 105 768

## Beschreibung

Die Erfindung betrifft einen Aktor mit einem Planetenwälzgewindetrieb (PWG), welcher insbesondere für die Betätigung einer Kupplung oder anderer Aggregate eines Fahrzeuges Anwendung findet.

Planetenwälzgewindespindeln (PWG) (auch bezeichnet als Planetenwälzgewindetriebe) sind seid vielen Jahren Stand der Technik und werden beispielsweise in DD 0277308 A5 beschrieben. Aus der Druckschrift DE 10 2010 047 800 A1 ist beispielsweise ein Planetenwälzgewindetrieb bekannt, der in einem Hydrostataktor in Form eines hydrostatischer Kupplungsaktors enthalten ist, um eine mittels eines Elektromotors erzeugte Drehbewegung in eine Axialbewegung umzuwandeln.

Ein Planetenwälzgewindetrieb, mit einer Gewindespindel, und mit einer auf der Gewindespindel angeordneten Mutter, und mit mehreren über den Umfang verteilten, zwischen der Gewindespindel und der Mutter angeordneten Planeten, die am Innenumfang der Mutter sowie am Außenumfang der Gewindespindel abwälzbar angeordnet sind, ist aus der Druckschrift DE 10 2010 011 820 A1 bekannt. Bei dieser Lösung ist eine Vorspanneinrichtung für die Planeten vorgesehen, wobei die Mutter zwei axial zueinander bewegliche Mutterteile aufweist, und wobei die Vorspanneinrichtung ein gegen das eine Mutterteil angefedertes Federelement aufweist. Die Mutter übernimmt zwei Funktionen: einerseits ist sie Getriebeteil und andererseits ist sie Teil der Vorspanneinrichtung. Ein gattungsbildender Aktor mit einem Planetenwälzgewindetrieb ist aus der Druckschrift US 2014/0105768 A1 bekannt.

Es sind hydraulische Betätigungsaktuatoren bekannt, welche über eine hydraulische Betätigungsstrecke eine Kupplung betätigt. Dabei wird zwischen einem Druckraum und einem Druckmittelreservoir unterschieden, die über eine Schnüffelbohrung miteinander verbunden sind. Wird die Schnüffelbohrung in Richtung auf den Druckraum überfahren, so wird der Druckraum von dem Druckmittelreservoir abgedichtet und ein Volumenausgleich kann nicht mehr stattfinden. Zur Abdichtung des Druckraums sind dabei gemäß der DE 10 2013 204 561 A1 drei angeordnete Dichtungen vorgesehen. Zwei der drei Dichtungen sind axial hintereinander angeordnet. Dabei dichtet eine erste der Dichtungen den Druckraum bei einer Betätigung gegen die Schnüffelbohrung ab und die andere zweite Dichtung dichtet den Raum des Elektromotors gegen das Druckmittelreservoir ab. Dabei ist die zweite Dichtung besonders kritisch hinsichtlich Leckageverlusten, weil eine damit Abdichtung gegen die Atmosphäre erfolgt.

Bekannt ist es auch, bei Freiläufen den Innenraum mit Kühl- und/oder Schmiermittel zu fluten (DE 10 2012 221 136 A1).

Die DE 40 36 209 C1 beschreibt ein Planetengetriebe, wobei der Getriebeinnenraum teilweise mit Schmieröl ausgefüllt und nach außen hin abgedichtet ist.

In einer noch nicht veröffentlichten Druckschrift wird ein gefluteter Aktor beschrieben, wobei der Druckmittelraum und der Gehäuseinnenraum ein gemeinsames Volumen bilden. Bei einer Relativbewegung zwischen Spindel und Planetenrollen kommt es jedoch hier nur zu einem minimalen Fluidaustausch zwischen dem von der Hülse begrenzten Innenraum des PWG und dem restlichen Gehäuseinnenraum.

Nachteilig ist die notwendige Abdichtung bei fettgeschmierten PWGs, sowie der benötigte Platzbedarf für die Fette, wobei die Fette einer Alterung unterliegen. Des Weiteren findet kein Wärmeenergietransport durch die Schmiermittel statt, wodurch eine Kühlung der PWG nicht möglich ist. Diese Faktoren können insgesamt den Wirkungsgrad des Aktors negativ beeinflussen.

Die Aufgabe der vorliegenden Erfindung besteht darin, einen Aktor zu entwickeln, der einen einfachen konstruktiven Aufbau aufweist und einen permanenten Schmiermittelausaustausch und Wärmeenergietransport gewährleistet.

Diese Aufgabe wird durch die kennzeichnenden Merkmale des ersten Patentanspruchs gelöst.

Vorteilhafte Ausgestaltungen ergeben sich aus den Unteransprüchen.

Die Erfindung betrifft einen Aktor mit einem Planetenwälzgewindetrieb (PWG), wobei der Aktor ein Gehäuse mit einem Zylinderraum und einem Druckmittelreservoir aufweist, wobei Druckmittelreservoir und Zylinderraum ein gemeinsames Volumen bilden und das Gehäuse mit einem Druckmittelfluid gefüllt ist und wobei der Planetenwälzgewindetrieb eine Spindel mit einer Profilierung aufweist, die mit mehreren Planetenrollen kämmt, welche um die Spindel herum achsparallel zur Spindel angeordnet sind und jeweils eine Profilierung aufweisen und an beiden Enden in einem Planetenrollenträger gelagert sind, wobei die Planetenrollen mit einer Innenprofilierung eines diese umringenden Hohlrades kämmen und wobei die Planetenrollenträger in einer, das Hohlrad umringenden Hülse abgestützt sind. Erfindungsgemäß weisen die Planetenrollenträger und/oder die Hülse einen oder mehrere Strömungskanäle auf, welche den Innenraum und den Außenraum, des radial von der Hülse und axial von den Planetenrollenträgern begrenzten Raumes miteinander verbinden.
Mittels der Strömungskanäle findet ein ständiger Schmiermittelaustausch innerhalb des Planetenwälzgewindetriebes statt, woraus die permanente Schmierung der Wälzkontakte folgt. Dabei wird vorteilhafterweise zusätzlich die im PWG entstandene Wärme abgeführt.

In einer bevorzugten Ausführungsform sind die Strömungskanäle am Innendurchmesser der Planetenrollenträger entlang der Längsachse der Planetenrollenträger nutenförmig ausgebildet.

Insbesondere weisen die Planetenrollenträger Ausnehmungen zur Aufnahme der Planetenrollen auf und sind die Strömungskanäle umfangsseitig versetzt zu den Ausnehmungen angeordnet. Dabei ist bevorzugt jeweils ein Strömungskanal zwischen zwei benachbarten Ausnehmungen angeordnet.

Die Strömungskanäle weisen im Querschnitt bevorzugt einen radienförmigen Verlauf auf.

Das Druckmittelfluid, welches als Schmiermittel verwendet wird ist vorteilhafter weise Bremsflüssigkeit, wobei dieser zur Optimierung der Schmierung Additiven zugesetzt sein können. Aufgrund des Verzichts auf eine Schmierung mittels Fettes kann der frei werdende Bauraum im PWG mit weiteren Planetenrollen gefüllt werden.

Die Hülse kann zweiteilig ausgebildet sein, wobei die beiden Hülsenteile mittels einer Verdrehsicherung zueinander verdrehgesichert sind und verdrehfest mit dem Rotor eines Elektromotors verbunden werden. Die Planetenrollenträger stehen ihrerseits über Verdrehsicherungen mit der Hülse in Wirkverbindung. Die Planetenrollen werden beidseitig von den Planetenrollenträgern geführt und in diesen gelagert.

Neben der Schmierung mit einem Druckmittelfluid besteht zudem die Möglichkeit die PWG einmalig zu fetten, wobei sich über die Lebensdauer das Fett mit dem Druckmittelfluid vermischt.

Aufgrund des gefluteten Gehäuses tritt vorteilhafterweise kein Schmiermittelverlust in dem Planetenwälzgewindetrieb auf.

Die Erfindung wird nachfolgend anhand eines Ausführungsbeispiels und zugehöriger Zeichnungen näher erläutert.

Es zeigen:
- Figur 1: eine schematische perspektivische Ansicht eines Aktors,
- Figur 2: eine schematische Schnittansicht des Aktors,
- Figur 3: eine schematische Schnittansicht des Aktors in einer Betriebsstellung,
- Figur 4: eine schematische Schnittansicht des Aktors in einer weiteren Betriebsstellung,
- Figur 5: eine schematische Darstellung eines Planetenwälzgewindetriebes im Längsschnitt,
- Figur 6: eine schematische Darstellung eines Planetenwälzgewindetriebes,
- Figur 7: einen Planetenträger mit Stömungskanälen.

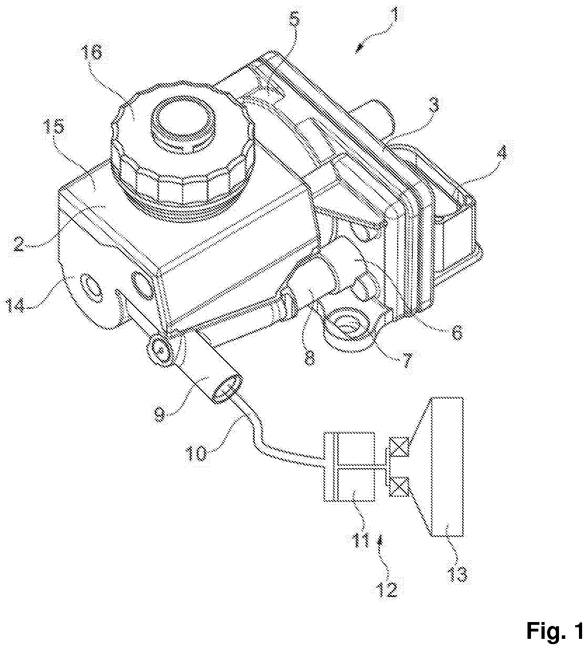

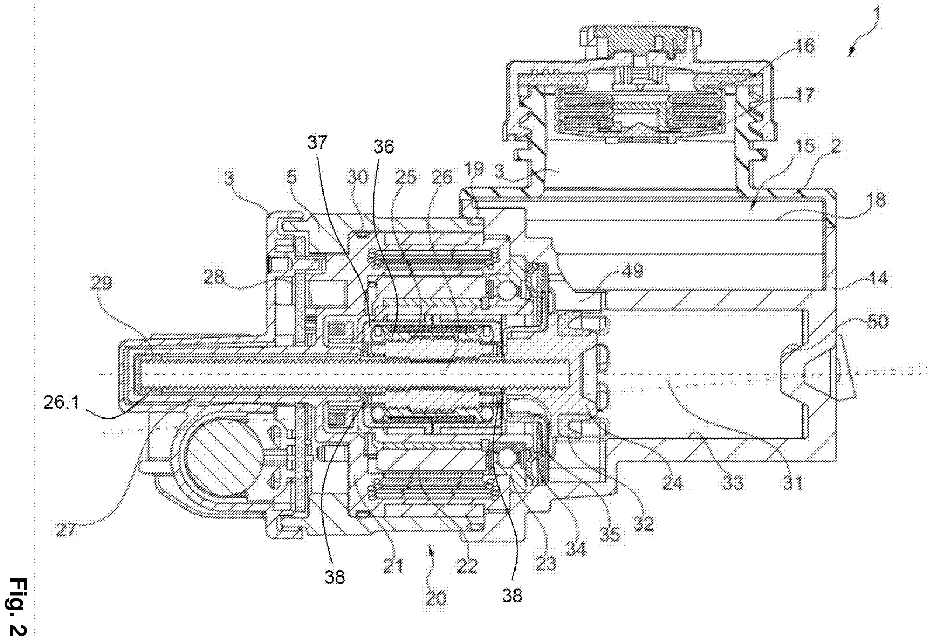

Die Figuren 1 und 2 zeigen den Aktor 1 mit einem Gehäuse 2, welches die aktiven oder beweglichen Bauteile des Aktors und die Druckmittelfluid fassenden Volumina umschließt. Das Gehäuse 2 weist an einer Seite ein Elektronikgehäuse 3 mit darin angeordneter Elektronik einer Steuereinheit auf, wobei die Steuereinheit mittels eines Steckers kontaktierbar ist, wobei benachbart zu dem Elektronikgehäuse 3 ein Stecker 4 vorgesehen ist. Der Stecker 4 kann dabei als weiblicher oder männlicher Stecker ausgebildet sein, in welchen ein jeweils anderweitiger Stecker eingreift, um eine elektrische Verbindung zu erzeugen. Die elektrische Verbindung ist dabei eine Leistungsstromversorgung und/oder eine Datenverbindung zur Übertragung von Daten oder Signalen.

Weiterhin umfasst das Gehäuse 2 ein Antriebsgehäuse, das im Falle des gezeigten Ausführungsbeispiels als Elektromotorengehäuse 5 ausgebildet ist. In diesem Teilgehäuse ist der Antrieb, hier als Elektromotor angeordnet. An diesem Gehäuseteil 5 sind ein Drucksensoranschluss 6 und ein Befestigungsauge 7 vorgesehen zur Befestigung des Aktors 1 beispielsweise an einem Kraftfahrzeug. An dem Drucksensoranschluss 6 ist ein Drucksensor 8 angebracht. Der Drucksensor 8 detektiert bevorzugt den Druck an dem Abgang 9 der Druckleitung 10, welche zu einem Nehmerzylinder 11 einer Ausrückvorrichtung 12 einer Kupplung 13 führt.

Das Gehäuse 2 weist weiterhin einen Gehäuseteil 14 als Druckmittelgehäuse auf, welches mit dem Gehäuse 5 des Elektromotors verbunden ist. An diesem Druckmittelgehäuse 14 ist ein Druckmittelreservoir 15 angeordnet, welches von einem Gehäusedeckel 16 verschließbar ist. Der Gehäusedeckel 16 ist im gezeigten Ausführungsbeispiel als Schraubdeckel ausgebildet. Er kann jedoch auch anderweitig mit dem Gehäuse 2 verbunden sein. Der Gehäusedeckel weist ein Volumenausgleichselement 17 auf, welche bei Volumenausdehnung oder Volumenreduktion einen Volumenausgleich erlaubt. Das Volumenausgleichselement 17 ist als flexibler Balg ausgebildet, der insbesondere federvorgespannt ist. und in Richtung auf das Druckmittelfluid 18 im Reservoir 3 vorgespannt ist. Dadurch kann er bei Volumenreduktion in das Reservoir 3 hinein bewegt werden und bei Volumenvergrößerung aus dem Reservoir 3 heraus bewegt werden.

Das Gehäuse 2 besteht im Wesentlichen aus den Gehäuseteilen 2 und 14, welcher an ihrer Schnittstelle mittels der Dichtung 19 miteinander verbunden abgedichtet sind. Diese Dichtung 19 ist bevorzugt eine O-Ringdichtung oder ähnliches, also eine statische Dichtung. Die Dichtung 19 liegt in einer Aufnahme des Gehäuses 5, welches in das Gehäuse 14 eingreift, so dass die Dichtung 19 zwischen den beiden Gehäusen 5 und 14 abdichtend anliegt.

Der Elektromotor 20 ist in dem Teilgehäuse 5 angeordnet und weist einen Stator 21 und einen Rotor 22 auf, der mittels des Lagers 23 im Gehäuse 5 drehbar gelagert ist. Zur Umsetzung der Drehbewegung des Rotors 22 in eine axiale Bewegung des Kolbens 24 ist ein Getriebe vorgesehen. Dieses Getriebe ist im Ausführungsbeispiel ein Spindelgetriebe (Planetenwälzgewindetrieb, PWG), welches mit einer drehbaren Spindel 26 ausgebildet ist. Die Spindel 26 weist eine Profilierung auf, welche gewindeartig mit Erhebungen und sich dazwischen erstreckende Rillen ausgebildet ist, wobei die Erhebungen und Rillen fortlaufend wendelartig in der Art einer Schraubenlinie verlaufen. Die Profilierung der Spindel 26 kämmt mit mehreren Planetenrollen 25, welche um die Spindel 26 herum achsparallel zur Spindel 26 angeordnet sind und jeweils eine Profilierung aufweisen. Die Planetenrollen 25 sind an beiden Enden in einem Planetenrollenträger 38 gelagert und kämmen mit einer Innenprofilierung eines die Planetenrollen 25 umringenden Hohlrades 36. Die Planetenrollenträger 38 sind in einer, das Hohlrad 36 umringenden Hülse 37 abgestützt und weisen hier nicht ersichtliche Strömungskanäle auf. Zur Verhinderung der Drehbewegung der Spindel 26 ist eine Drehabstützung 27 im Gehäuse 5 vorgesehen. Auch ist eine spindelfeste Drehabstützung 29 vorgesehen, welche als Art Kappe am Ende der Spindel 26 angeordnet ist. Das Elektronikgehäuse 3 umfasst eine Platine 28, welche die Steuereinheit darstellen kann bzw. Teil dieser sein kann. Neben der Dichtung 19 ist eine weitere statische Dichtung 30 vorgesehen, welche zwischen dem Nassraum des Reservoirs 15 und dem Trockenraum 51 der Elektronik angeordnet ist. Sie kann ebenso als O-Ringdichtung ausgebildet sein.

Der Kolben 24 ist an einem Ende der Spindel 26 befestigt bzw. er weist eine Aufnahme auf, in welche die Spindel 26 eingreift und worin die Spindel befestigt ist. Zur Abdichtung des Kolbens gegenüber dem Zylinderraum 31 der Kolben-Zylindereinheit ist eine Bewegungsdichtung 32 mit dem Kolben 24 verbunden angeordnet. Dabei stützt sich eine statische Dichtlippe an dem Kolben 24 ab und eine Bewegungsdichtlippe an der Wand 33 des Zylinderraums 31. Zwischen dem Gehäuse 2 und dem Kolben 24 ist eine Referenzierfeder 34 mit einem Federtopf 35 angeordnet, welche sich einerseits an dem Gehäuse 2 bzw. 14 und andererseits an dem Kolben 24 oder an der Kolbenstange abstützt. Dabei ist die Kolbenstange als die Spindel 26 ausgebildet. Die Referenzierfeder 34 ist dabei als Tellerfeder ausgebildet und bewirkt eine definierte Rückstellkraft auf den Kolben 24 im Bereich seiner einen Endposition.

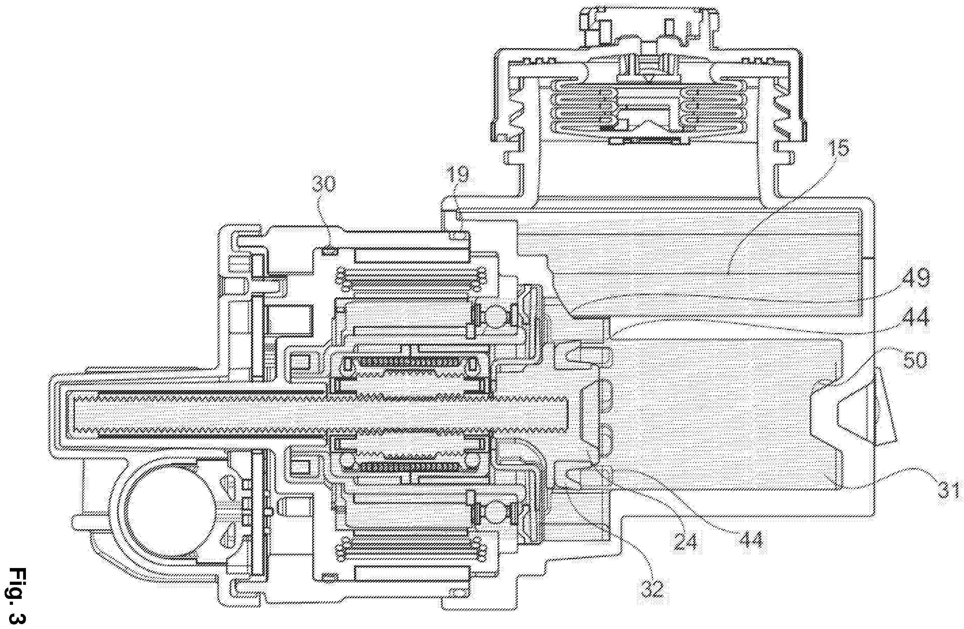

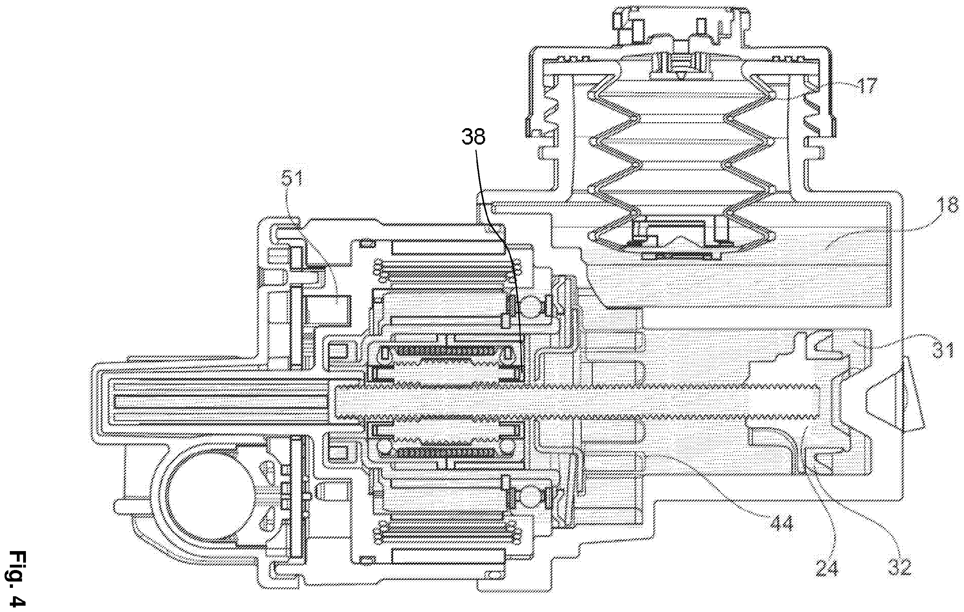

Die Figuren 3 und 4 zeigen, dass das Gehäuse 2 im Wesentlichen vollständig mit dem Druckmittelfluid geflutet ist. Das Druckmittelfluid besteht vorzugsweise aus Bremsflüssigkeit, wobei für eine bessere Schmierwirkung zusätzliche Additive hinzugefügt werden. Der Spiegel des Druckmittelfluids innerhalb des Gehäuses 2 ist gestrichelt dargestellt wobei auch der Planetenwälzgewindetrieb geflutet ist. Überfährt die Dichtung 32 die Kante 44 nach rechts, so ist der Zylinderraum abgeschlossen. Ist die Dichtung 32 gegenüber der Kante 44 nach links verschoben, so ist eine Fluidverbindung zum Fluidreservoir ausgebildet und das Druckmittelfluid kann ausgeglichen werden bzw. es kann ein Druckausgleich durchgeführt werden. Die Öffnung 50 dient als Druckabgang des Zylinderraums 31.

Dabei ist in Figur 3 gezeigt, dass der Kolben 24 soweit in einer zurückgezogenen Position ist, dass die Fluidverbindung durch den Kanal 44 zwischen dem Druckraum bzw. dem Zylinderraum 31 und dem Reservoir 18 gewährleistet ist. Die Dichtung 32 hat die Kanten 44 noch nicht überfahren.

Dem gegenüber zeigt die Figur 4 eine Position des Kolbens, in welchem der Kolben nahezu an seiner anderen ausgefahrenen Endposition angeordnet ist. Der Druckraum des Zylinderraums 31 ist abgeschlossen, weil die Dichtung 32 die Kanten 44 überfahren hat. Durch die Verlagerung des Kolbens 24 zur Verschiebung einer Fluidsäule wird Volumen des Druckmittelfluids aus dem Aktor in die Druckleitung verlagert, was dazu führt, dass der Balg der Volumenausgleichsvorrichtung 17 ausfährt. Bewegt sich der Kolben nun in der Zeichnungsebene nach links, muss Fluid in Richtung des Zylinderraumes 31 verdrängt werden. Durch die erfindungsgemäß in den Planetenrollenträgern 38 vorhandenen, hier nicht ersichtlichen Strömungskanäle, wird die Durchströmung der Getriebeeinheit deutlich vereinfacht.

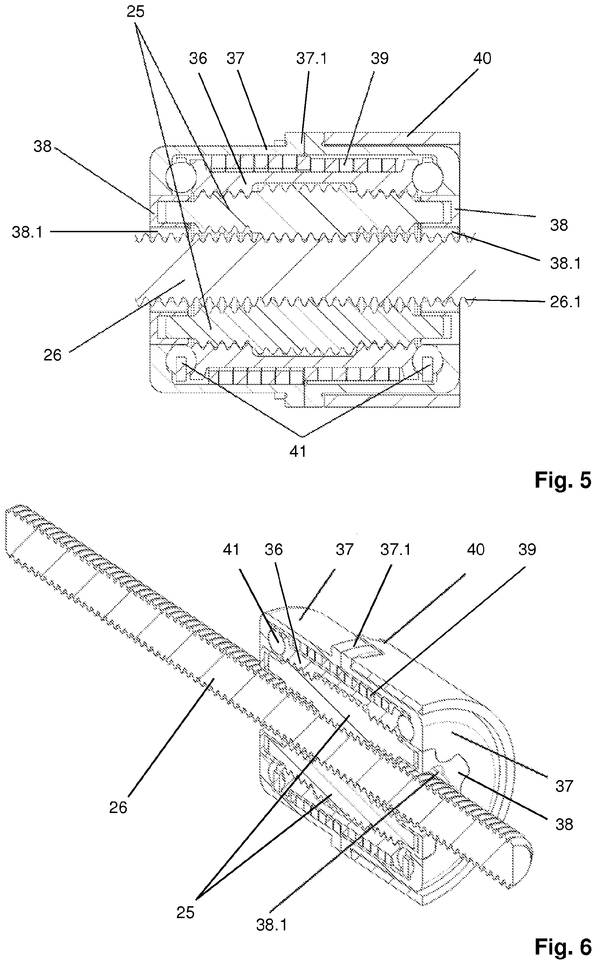

Die Figuren 5 und 6 zeigen den Planetenwälzgewindetrieb (PWG) aus dem Aktor herausgelöst. Der PWG weist eine Spindel 26 mit einem Außengewinde 26.1 mit einer Steigung auf. Die Spindel 26 ist mit einem nicht dargestellten Rotor des Antriebes (E-Motor) drehfest verbunden und mit dem Antrieb um eine Drehachse antreibbar. Mit der Spindel 26 stehen mehrere Planetenrollen 25 in Eingriff, die mit einem die Planetenrollen 25 umringenden Hohlrad 36 kämmen. Vorzugsweise werden drei oder ein Vielfaches von drei Planetenrollen 25 in Umfangsrichtung um die Spindel 26 positioniert. Die Planetenrollen 25 sind an beiden Enden in jeweils einem Planetenrollenträger 38 drehbar aufgenommen, wobei die beiden Planetenrollenträger 38 drehfest abgestützt sind. Jeder Planetenrollenträger 38 wird in einem endseitig radial nach innen weisenden Bereich einer Hülse 37 aufgenommen, die in zwei Hälften unterteilt ist, welche einen radial nach außen weisenden Bund 37.1 aufweisen und an diesem über eine Verdrehsicherung 40 drehfest und axial fest miteinander verbunden sind. Das Hohlrad 36 überträgt über zwei Axiallager 41 des PWG die Axialkräfte aus den Planetenrollen 25 in die Hülse 37. Eine Schlingfeder 39 ist in den PWG als Freilauf integriert.
Die Planetenrollenträger 38 weisen mindestens einen, vorzugsweise mehrere Strömungskanäle 38.1 auf, welche eine optimale Durchströmung des von der Hülse 37 und von den Planetenrollenträgern 38 begrenzten Raumes und somit auch eine Schmierung der Wälzkontakte zwischen Spindel 26, Planeten 25 und Hohlrad 36 gewährleisten.

Aufgrund der Flutung des PWG mit dem Druckmittelfluid über die Strömungskanäle besteht ein ständiger Schmiermittelaustausch, wobei gleichzeitig eine Wärmeenergietransport stattfindet. Der nicht benötigte Fettbauraum kann für weitere Planetenrollen genutzt werden. Der PWG kann einmalig befettet werden, so dass das Fett über die Lebensdauer des PWG mit dem Druckmittelfluid vermischt wird.

In Figur 6 sind die in den Planetenrollenträgern 38 vorhandenen, erfindungsgemäßen Strömungskanäle 38.1 deutlich zu erkennen.

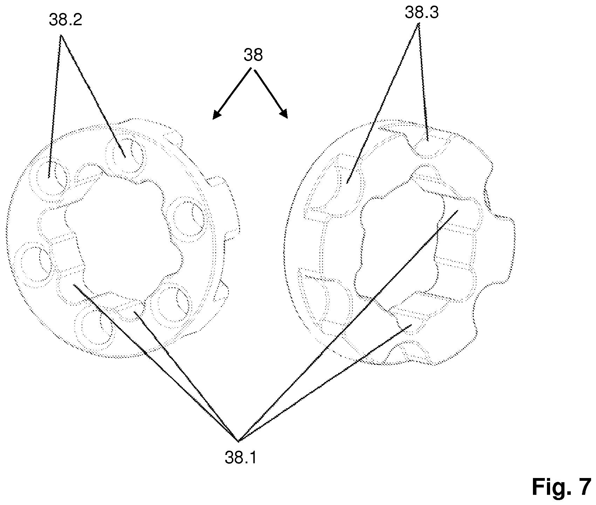

Figur 7 zeigt eine Detailansicht der Planetenrollenträger 38, welche ringförmig ausgebildet sind. Entlang der Längsachse der Planetenrollenträger 38 an deren Innendurchmessers sind die Strömungskanäle 38.1 gleichmäßig verteilt. Erfindungsgemäß ist zumindest ein Strömungskanal 38.1 vorgesehen, vorteilhafter Weise sind mehrere, in diesem Beispiel sechs Strömungskanäle 38.1 vorgesehen, über die ein Schmiermittelaustausch ermöglicht wird. Die Strömungskanäle 38.1 sind nutenförmig ausgebildet und weisen im Querschnitt einen radienförmigen Verlauf auf. Die Planetenrollenträger 38 weisen in Richtung der Planetenrollen Ausnehmungen 38.2 auf, in denen die Planetenrollen abgestützt und gelagert werden. Die Strömungskanäle 38.1 sind umfangsseitig versetzt zu den Ausnehmungen 38.2 angeordnet. Dabei ist jeweils ein Strömungskanal 38.1 zwischen zwei benachbarten Ausnehmungen 38.2 angeordnet. Des Weiteren weisen die Planetenrollenträger 38 Drehabstützungen 38.3 auf, die mit der Hülse in Wirkverbindung stehen.

Aufgrund der im Wesentlichen vollständig gefluteten PWG 1 kann auf eine Abdichtung des Planetenrollenträgers 7 verzichtet werden.

Durch die erfindungsgemäße Lösung kommt es vorteilhafterweise zu einem permanenten Schmiermittelausaustausch und Wärmeenergietransport zwischen PWG und PWG-Außenraum. Die Schmierung der Wälzkontakte wird sichergestellt. Innerhalb des PWG kann es vorteilhafterweise nicht zu einer Fettalterung kommen. Der durch das eingesparte Fett gewonnene Bauraum kann für weitere Planetenrollen genutzt werden.

### Bezugszeichenliste

- 1: Aktor
- 2: Gehäuse
- 3: Elektronikgehäuse
- 4: Stecker
- 5: Elektromotorengehäuse
- 6: Drucksensoranschluss
- 7: Befestigungsauge
- 8: Drucksensor
- 9: Abgang
- 10: Druckleitung
- 11: Nehmerzylinder
- 12: Ausrückvorrichtung
- 13: Kupplung
- 14: Gehäuseteil, Druckmittelgehäuse
- 15: Druckmittelreservoir
- 16: Gehäusedeckel
- 17: Volumenausgleichselement
- 18: Druckmittelfluid
- 19: Dichtung
- 20: Elektromotor
- 21: Stator
- 22: Rotor
- 23: Lager
- 24: Kolben
- 25: Planetenrollen
- 26: Spindel
- 26.1: Außengewinde
- 27: Drehabstützung
- 28: Platine
- 29: Drehabstützung
- 30: Dichtung
- 31: Zylinderraum
- 32: Dichtung
- 33: Wand
- 34: Referenzierfeder
- 35: Federtopf
- 36: Hohlrad
- 37: Hülse
- 37.1: Bund
- 38: Planetenrollenträger
- 38.1: Strömungskanal
- 38.2: Ausnehmung
- 38.3: Drehabstützung
- 39: Schlingfeder
- 40: Verdrehsicherung
- 41: Axiallager
- 44: Hinterkante, Kante
- 49: Schnüffeldurchbrüche
- 50: Öffnung
- 51: Trockenraum

## Patentansprüche

1. Aktor (1) mit einem Planetenwälzgewindetrieb (PWG), wobei der Aktor (1) ein Gehäuse (2) mit einem Zylinderraum (31) und einem Druckmittelreservoir (15) aufweist, wobei Druckmittelreservoir (15) und Zylinderraum (31) ein gemeinsames Volumen bilden und das Gehäuse (2) mit einem Druckmittelfluid gefüllt ist und der Planetenwälzgewindetrieb eine Spindel (26) mit einer Profilierung (26.1) aufweist, die mit mehreren Planetenrollen (25) kämmt, welche um die Spindel (26) herum achsparallel zur Spindel (26) angeordnet sind und jeweils eine Profilierung aufweisen und an beiden Enden in einem Planetenrollenträger (38) gelagert sind, wobei die Planetenrollen (25) mit einer Innenprofilierung eines diese umringenden Hohlrades (36) kämmen und wobei die Planetenrollenträger (38) in einer, das Hohlrad (36) umringenden Hülse (37) abgestützt sind, **dadurch gekennzeichnet, dass** die Planetenrollenträger (38) und/oder die Hülse (37) einen oder mehrere Strömungskanäle (38.1) aufweisen, welche den Innenraum und den Außenraum, des radial von der Hülse (37) und axial von den Planetenrollenträgern (38) begrenzten Raumes miteinander verbinden.

2. Aktor nach Anspruch 1, **dadurch gekennzeichnet, dass** die Strömungskanäle (38.1) am Innendurchmesser der Planetenrollenträger (38) entlang der Längsachse der Planetenrollenträger (38) nutenförmig ausgebildet sind.

3. Aktor nach Anspruch 2, **dadurch gekennzeichnet, dass** die Planetenrollenträger (38) Ausnehmungen (38.2) zur Aufnahme der Planetenrollen (25) aufweisen und dass die Strömungskanäle (38.1) umfangsseitig versetzt zu den Ausnehmungen (38.2) angeordnet sind.

4. Aktor nach Anspruch 3, **dadurch gekennzeichnet, dass** jeweils ein Strömungskanal (38.1) zwischen zwei benachbarten Ausnehmungen (38.2) angeordnet ist.

5. Aktor nach einem der Ansprüche 1 bis 4, **dadurch gekennzeichnet, dass** als Druckmittelfluid Bremsflüssigkeit verwendet wird.

6. Aktor nach einem der Ansprüche 1 bis 5, **dadurch gekennzeichnet, dass** der Bremsflüssigkeit vorzugsweise Additive zur Optimierung der Schmierung zugesetzt sind.

7. Aktor nach einem der Ansprüche 1 bis 6, **dadurch gekennzeichnet, dass** die Planetenrollenträger (38) Verdrehsicherungen (38.3) aufweisen, welche mit der Hülse (37) in Wirkverbindung stehen.

## Claims

1. Actuator (1) having a planetary roller screw drive (PRS), the actuator (1) having a housing (2) with a cylinder chamber (31) and a pressure medium reservoir (15), the pressure medium reservoir (15) and the cylinder chamber (31) forming a common volume, and the housing (2) being filled with a pressure medium fluid, and the planetary roller screw drive having a spindle (26) with a profiling (26.1) which meshes with a plurality of planetary rollers (25) which are arranged around the spindle (26) in an axially parallel manner with respect to the spindle (26) and in each case have a profiling and are mounted at the two ends in a planetary roller carrier (38), the planetary rollers (25) meshing with an inner profiling of an internal gear (36) which surrounds them, and the planetary roller carriers (38) being supported in a sleeve (37) which surrounds the internal gear (36), **characterized in that** the planetary roller carriers (38) and/or the sleeve (37) have/has one or more flow ducts (38.1) which connect the inner space and the outer space of the space which is delimited radially by the sleeve (37) and axially by the planetary roller carriers (38) to one another.

2. Actuator according to Claim 1, **characterized in that** the flow ducts (38.1) are of groove-shaped configuration on the internal diameter of the planetary roller carriers (38) along the longitudinal axis of the planetary roller carriers (38).

3. Actuator according to Claim 2, **characterized in that** the planetary roller carriers (38) have recesses (38.2) for receiving the planetary rollers (25), and **in that** the flow ducts (38.1) are arranged offset on the circumferential side with respect to the recesses (38.2) .

4. Actuator according to Claim 3, **characterized in that** in each case one flow duct (38.1) is arranged between two adjacent recesses (38.2).

5. Actuator according to one of Claims 1 to 4, **characterized in that** brake fluid is used as the pressure medium fluid.

6. Actuator according to one of Claims 1 to 5, **characterized in that** additives for optimizing the lubrication are preferably added to the brake fluid.

7. Actuator according to one of Claims 1 to 6, **characterized in that** the planetary roller carriers (38) have anti-rotation safeguards (38.3) which are operatively connected to the sleeve (37).

## Revendications

1. Actionneur (1) muni d'une vis d'entraînement à roulement planétaire (PWG), l'actionneur (1) présentant un boîtier (2) avec un espace de cylindre (31) et un réservoir de fluide sous pression (15), le réservoir de fluide sous pression (15) et l'espace de cylindre (31) formant un volume commun et le boîtier (2) étant rempli d'un fluide sous pression et la vis d'entraînement à roulement planétaire (PWG) présentant une broche (26) avec un profilage (26.1) qui s'engrène avec plusieurs rouleaux planétaires (25) qui sont disposés autour de la broche (26) avec leur axe parallèle à la broche (26) et qui présentent chacun un profilage et sont supportés aux deux extrémités dans un support de rouleau planétaire (38), les rouleaux planétaires (25) s'engrenant avec un profilage interne d'une couronne dentée (36) entourant ceux-ci et les supports de rouleaux planétaires (38) étant supportés dans une douille (37) entourant la couronne dentée (36), **caractérisé en ce que** les supports de rouleaux planétaires (38) et/ou la douille (37) présentent un ou plusieurs canaux d'écoulement (38.1) qui relient l'espace interne et l'espace externe de l'espace limité radialement par la douille (37) et axialement par les supports de rouleaux planétaires (38).

2. Actionneur selon la revendication 1, **caractérisé en ce que** les canaux d'écoulement (38.1) sont réalisés en forme de rainure au niveau du diamètre intérieur des supports de rouleaux planétaires (38) le long de l'axe longitudinal des supports de rouleaux planétaires (38).

3. Actionneur selon la revendication 2, **caractérisé en ce que** les supports de rouleaux planétaires (38) présentent des évidements (38.2) pour recevoir les rouleaux planétaires (25) et **en ce que** les canaux d'écoulement (38.1) sont disposés de manière décalée du côté périphérique par rapport aux évidements (38.2).

4. Actionneur selon la revendication 3, **caractérisé en ce qu'**un canal d'écoulement (38.1) est à chaque fois disposé entre deux évidements (38.2) adjacents.

5. Actionneur selon l'une quelconque des revendications 1 à 4, **caractérisé en ce que** l'on utilise en tant que fluide sous pression du liquide de frein.

6. Actionneur selon l'une quelconque des revendications 1 à 5, **caractérisé en ce que** de préférence des additifs pour optimiser la lubrification sont ajoutés au liquide de frein.

7. Actionneur selon l'une quelconque des revendications 1 à 6, **caractérisé en ce que** les supports de rouleaux planétaires (38) présentent des fixations antirotation (38.3) qui sont en liaison fonctionnelle avec la douille (37).
